# EUROPEAN PATENT SPECIFICATION

(11) **EP 2 587 946 B1**
(45) Date of publication and mention of the grant of the patent: **12.04.2017**
(21) Application number: 11768095.9
(22) Date of filing: 28.06.2011
(51) Int. Cl.: A23N 12/08, A23B 7/02, F26B 25/22

(54) **PLANT AND PROCESS FOR HIGH OPERATIONAL EFFICIENCY GRAPES WITHERING BY DEHYDRATION**
VORRICHTUNG UNF VERFAHREN ZUR HOCHEFFIZIENTEN AUSTROCKNUNG VON TRAUBEN MITTELS WASSERENTZUG
DISPOSITIF ET PROCEDE POUR L'ESSORAGE À HAUTE EFFICACITÉ PAR DÉSHYDRATATION

(30) Priority: 02.07.2010 IT VR20100133
(43) Date of publication of application: 08.05.2013
(73) Proprietor: Lanzillo Ingegneria S.r.l., 37129 Verona (IT)
(72) Inventor: LANZILLO, Ascanio Eugenio, 37129 Verona (IT)
(74) Representative: Grimaldo, Andrea
(86) International application number: PCT/IB2011/001922
(87) International publication number: WO 2012/001522

(56) References cited:
- EP-A2- 1 949 804
- WO-A1-96/39854
- WO-A1-2010/063057
- FR-A- 465 971
- FR-A1- 2 546 618
- US-A- 4 704 806
- US-A- 4 987 688
- US-A- 6 085 443

## Description

### TECHNICAL FIELD

The present invention relates to the field of plants and processes for grapes withering by dehydration. The invention relates particularly to a plant according to the preamble of claim 1. Such plants (and the relevant processes) are usually used in the grapes withering operation by dehydration and resulting in the change in their sugar content for the following vinification.

### PRIOR ART

According to the prior art, grapes, when harvested from the vineyard, are arranged in one or more layers, inside suitable containers such as for example boxes or trays.

Such containers are placed in a special room, also called as fruit storage room (or dehumidification room or dehydration room or grapes withering room) that is a part of the known plant and they are left here for a time necessary and sufficient for reducing the water content in the grapes, such to enhance the sugar content.

The room is a volume housing the grape containers, where fans generating an air flow are placed. Containers are stacked inside such volume such to form islands separated from each other by operating and/or inspection pathways.

Therefore air treated by a dehumidifier and supplied through perforated metal ducts or ducts made of porous fabric is introduced into the room.

The treated air serves for maintaining the grapes at a predetermined humidity level and at a preferred temperature.

The supply ducts are arranged at the ceiling and the only intake point is that of the dehumidification assembly, from where the air of the room is drawn in order to be treated again before being re-introduced via said supply ducts or to be discharged and drawn even from the outside.

The air flow from the ducts towards the intake point is spread into the room by means of fans (typically simple axial-flow fans), mounted on movable floor platforms, such that they can be moved and arranged, each time, in strategic positions.

The loss in weight of the grapes is indirectly controlled by iterative and frequent measurements of Bx° (Brix grades), however the indirect measurement is often not so much satisfactory since the measurement points are arbitrarily randomly selected by the wine expert.

In other cases, the loss in weight of the grapes is directly measured by locally occurring measurements by using sensors applied on a small number of supports bearing the containers randomly arranged on the whole area of the fruit storage room. Finally (whether allowed by external thermo-hygrometric conditions) the grape withering is kept going on spontaneously by simple natural or mechanically assisted air changes (extractors/open windows or blowers/extractors, in both cases, in combination with each other), therefore stopping the dehumidification assembly.

Although the prior art described above is functional for some reasons, however it has some drawbacks.

Firstly the air flow (treated or natural) follows a turbulent, unidirectional motion condition from the ducts to the intake point : as a consequence the air is randomly spread on the grapes containers and in a manner that is everything but homogenous, resulting in the fact that some containers are more hit by the air flow than other ones.

Finally, this leads the grapes of different containers to be withered in a different manner, with not uniform results as regards the ponderal loss in water and the increase in the sugar content.

It is highly possible for the humid air flow to stagnate among the overlapped containers: this in turn leads to an important risk of moulds growth and/or of the generation of optimal habitats for the proliferation of fruit flies and/or of rottenness of the grapes.

Therefore it is necessary to periodically move the containers, both for exposing them more uniformly to the air flow, and for manually removing rotten grapes or bunches of grapes preventing them from damaging the adjacent grapes.

A further drawback relates to the fact that the efficacy of the process described above mainly relies on the experience of the operator, which obviously is subjected to human aspects that cannot be controlled and therefore not having a satisfactory repeatability level.

Still a further drawback, that makes the situation highly uncertain, relates to the control of the ponderal loss in weight of the grapes or on the containers selected by the operator.

The method described above substantially does not represent the withering level of the whole volume of grapes object of the treatment, since the average values are highly altered by one of the aspects described above.

Therefore, and finally, the method used up to now can be subjected to considerable improvements.

EP1949804 discloses a plant for dehydrating grapes contained into containers stocked on pallets and a relative drying process. The plant comprises air conditioning unit that are operated to control weight reduction of the grapes based on inputs from temperature, humidity and grapes weight sensors placed below the pallets.

FR254618 discloses a plant for drying products, between those also fruit and vegetables. Products are placed on a conveyor belt which moves across evaporation cells wherein hot air is forced on the products.

### OBJECTS AND SUMMARY OF THE INVENTION

The object of the present invention is to overcome some of the prior art drawbacks.

Particularly the object of the present invention is to provide a plant and a process for the grapes withering (and its management) by dehydration, that is able to overcome the above mentioned drawbacks.

Particularly the object of the present invention is to provide such a plant (and the relevant process) that guarantees a high efficiency and an accurate control level, regardless of the thermo-hygrometric conditions outside the room and regardless of the human factor.

Another object of the present invention is to achieve such productivity and efficiency levels that are greater than the results achieved by the known grapes withering systems available on the market.

The basic idea of the present invention is to provide a plant of the type mentioned above and provided with air flow generating means comprising a ventilation circuit provided with at least a flow generator and a first and second air diffusion modules that are arranged facing each other and at the opposite sides of the room, according to claim 1.

The two air diffusion modules are intended for the supply and the forced intake respectively of an air flow generated by said generating means and they have the same air passage area.

This characteristic makes the air flow inside the plant more uniform and little turbulent and it guarantees the humid air not to stagnate in the interspaces between one container and another one, thus making the grapes dehydration uniform.

The same air flow rate coming from a diffusion module, is drawn by the other facing diffusion module, thus the air supplied by a diffusion module is drawn after having hit the grapes containers arranged between one module and another one.

The proper diffusion of the air achieved in the plant according to the present invention, allows air to be efficaciously spread with respect to known processes that use movable axial-flow fans; as a consequence this characteristic allows the energy consumption of the plant to be reduced.

According to advantageous improvements, the plant further comprises at least one sensor for detecting the operating parameters indicative of the grape dehydration level.

Here the term "sensor" means a single detecting device or a system comprising a plurality of detecting devices uniformly arranged inside the room.

Such sensor is operatively connected to the air flow generating means that are actuatable on the basis of said operating parameters in order to control and manage the air flow flowing through the room volume.

Thus it is possible to control the grapes dehydration condition and to adjust the air flow such to increase or reduce the grapes dehydration, such to end the dehydration process within the expected time and such to limit the energy consumption.

Then by reversing the direction of the air flow it is possible to have a more uniform dehydration of the grapes. The dried air introduced into the plant captures the grapes moisture, otherwise with the reversal of the air flow not occurring the grapes placed closer to the air inlet port would become dehydrated more slow than those placed closer to the air outlet port in the room. Preferably the air flow reversal is driven periodically in the dehydration period on the basis of a timing based on suppositions about the loss in weight of the grapes in the unit of time, thus the experience of the operator becoming little influential.

In some embodiments such timing is prearranged (namely predetermined), in other embodiments it depends on the operating parameters.

The plant of the invention then comprises other several advantageous characteristics, that will be described better below and that are the object of the annexed claims.

A further object of the present invention is a process for withering the grapes in a dehumidification room of a dehydration plant, according to claim 11, comprising at least the steps of:
a - arranging grapes into a plant sealable from the outside
b - conveying an air flow with a prevalent direction on said grapes, by means of a first diffusion module
c - drawing said air flow by means of a second diffusion module,
wherein said first diffusion module and said second diffusion module have substantially the same air passage area and are faced each other along said prevalent direction.

It has to be noted that in the present description the direction and the sense followed by the air flow in the volume are defined as "prevalent": this term means that the summation of the velocity vectors of the fluid layers of the air flow is a vector having a certain predominant direction and a certain predominant sense that are substantially coincident (provided that there are no losses) with the velocity vector of the air at the last physical section of the supply diffusion module.

Namely such prevalent direction is that followed by the air stream flowing from the supply diffusion module to the intake one.

Further objects and advantages of the present invention will be more clear from the following description and from the annexed claims which are an integral part of the present description.

### BRIEF DESCRIPTION OF THE DRAWINGS

Now the invention will be described below with reference to a non limiting example, provided for illustrative and non limitative purposes in the annexed drawings.
Fig.1 is a first schematic top view of a plant according to the present invention;
Fig.2 is a second schematic top view of a plant according to the present invention;
Fif.3 is a cross-sectional view of the plant of fig.1;
Fig.4 is a detail of the plant of the previous figures;
Fig.5 is a further detail of the plant of the previous figures;
Fig.6 is a last detail of the plant of the previous figures.

### DETAILED DESCRIPTION OF THE INVENTION

While the invention is susceptible to various modifications and alternative forms, one embodiment thereof is shown in the drawings and is described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

The use of "for example", "etc", "or" indicates non-exclusive alternatives without limitation unless otherwise noted. The use of "including" means "including, but not limited to," unless otherwise noted.

Generally and according to a simplified version, the plant and the process according to the present invention provide at least a dehumidification room 2 isolatable from an external environment and intended to house grapes containers C, air flow generating means 30 comprising a ventilation circuit and a first and second diffusion modules 4a, 5a, 4b, 5b, 4c, 5c for said air flow into said room 2, said first and second diffusion modules 4a, 5a, 4b, 5b, 4c, 5c being faced each other and being arranged at the opposite sides of the room 2 and being intended for the supply and for the forced intake of an air flow respectively, said first and second diffusion modules 4a, 5a, 4b, 5b, 4c, 5c being substantially provided with the same air passage area.

Thus it is possible to guarantee the treatment air to be uniformly spread into the room.

The plant and the relevant process further provide, according to more evolved forms, the room to be divided into weighing load units and the use, for each weighing unit, of a suitable system for directly weighing the load exerted thereupon and its variations.

Moreover according to the teachings described below the plant is also equipped with its own system for indirectly weighing the loss in weight of the grapes which replaces or integrates the direct one.

Ventilation inside the room is further provided by means of at least a conditioned air flow, that is homogeneously spread and that has a horizontal uniform motion.

Then, in order to monitor the operating parameters on the basis of which the air flow is adjusted (e.g. speed, direction) sensors are provided which are arranged in strategic positions, measuring the parameters characterizing the climate and/or the dehydration level of the grapes into the room.

Particularly, the overall air flow, in relation to the whole cell, and the partial one, in relation to one relevant portion (R) thereof can be controlled on the basis of the measured operating parameters (e.g. the dehydration level of the grapes) and/or of the operating parameters settable by an operator (e.g. the preferred time length of the dehydration process).

The control of the air flow comprises also the reversal of the motion of the air flow and/or the use of untreated external air under specific operating conditions, particularly when temperature and humidity conditions of the environment outside the plant are close to or identical to those provided by the plant control system.

Preferably, the plant comprises air flow regulators, such devices being intended to control the air flows moving in the whole room and in its constituent portions. Thus, the plant allows a plurality of air flows having different speeds and having the same direction to be provided in a single room.

In this embodiment, the air flow regulation devices are arranged such that the individual air flows have all a parallel direction, such to reduce turbulences in the room.

Finally the plant can be installed in existing facilities, by appropriately adjusting them, or in new construction facilities.

According to a preferred embodiment, the ventilation, inside the withering room, is accomplished by a continuous, conditioned or external, air flow ("stream"), characterized by a closed cycle or open cycle operation; a uniformly spread distribution of the air in the environment; a uniform motion that is horizontal and orthogonal to the rows of pallets stored in the room; modulability of air flow rate; reversibility of the direction of the air motion.

The closed cycle ventilation is carried out by a suitable flow rate of air, treated in terms of relative humidity and temperature.

When allowed by the change in the weight of the grapes, the air flowing in the room can be even only dehumidified.

The open cycle ventilation is carried out by drawing air from the environment outside the room.

The external air is drawn into the fruit storage room for cleaning or replacement operations, if necessary, or for the process, only and exclusively, when its thermo-hygrometric conditions are close to or in line with those set for withering the grapes, paying attention to adjust them, upon the entrance in the room, just as much as it is needed. The exhausted air is directly discharged to the outside.

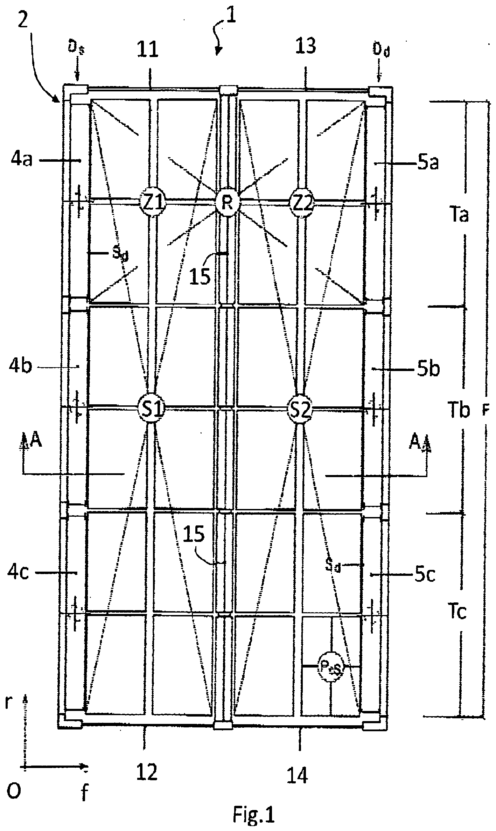

With reference now to figures 1, 2 and 3 there is shown a non limitative example of a plant 1 for the grapes withering by dehydration according to the present invention.

In a basic form, it comprises a dehumidification room 2 isolatable from an outer environment; inside the room 2 containers C, particularly for grapes, are housed, which generally can be of any known type, such as boxes, trays or the like having the walls at least partially perforated.

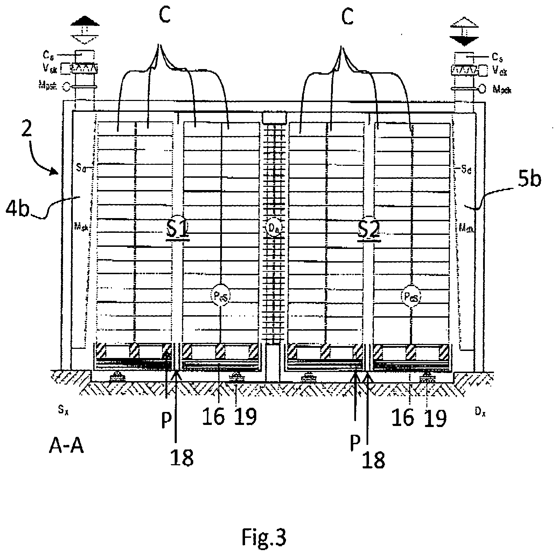

In order to optimize the use of the volume of the room 2, containers C are stacked one on the other, as clearly shown in fig.3: this arrangement can be advantageously used since by means of the plant of the present invention grapes are uniformly dehydrated and containers C do not need to be periodically moved.

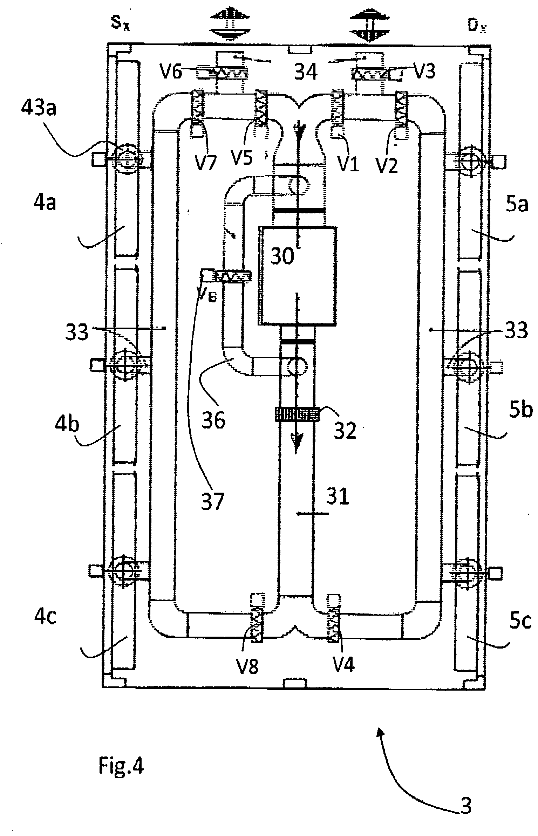

The plant 1 further comprises air flow generating means 3, shown in the detail of figure 4 and that will be described below in details.

Suffice it to note that the air flow generating means 3 in turn comprise at least a ventilation circuit provided with an axial or centrifugal fan that is connected to at least a pair of diffusion modules.

To this end it has to be noted from now on that in the example three pairs of diffusion modules 4a, 5a, 4b, 5b, 4c, 5c are shown, but only one, two, four or more, may be provided, depending on installation requirements.

Each diffusion module of each pair 4a, 5a, 4b, 5b, 4c, 5c is intended for the alternate supply and forced intake of an air flow.

The two diffusion modules 4a, 5a, 4b, 5b, 4c, 5c of each pair are faced one another and are arranged at the opposite sides of vertical shell walls of the room 2, that join the ceiling to the floor of the room.

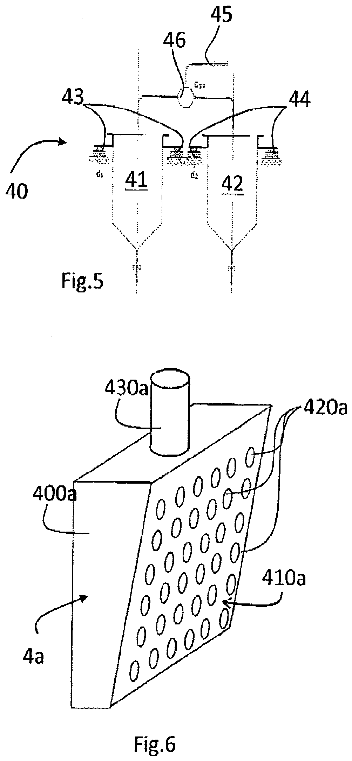

Preferably, each one of the diffusion modules is made as the one 4a shown in fig.6 and it comprises a case 400a having a first section (vertical in fig.6) uniformly tapering from one end to the other one and that is constant along a second section transverse to said first section (horizontal in fig.6).

More in details the case 400a comprises a supply wall 410a provided with a plurality of holes 420a for the air passage.

Particularly the taper in the section of the case 400a is linearly proportional to its distance from the wall to which a supply or discharge tube 430a is connected, in turn connected to an air treatment ventilation unit, or more briefly UTA, 30, reference thereto will be made later in details.

The taper in section, together with the fact that all the holes 420a have substantially the same area, guarantees that the air output speed is substantially uniform for the whole module 4a, to the benefit of the uniformity in the distribution.

The plant 1 further provides the use of a reference to a system of Cartesian axes (f;r), with origin "O", to which the whole spatial arrangement of the room 2 makes reference and that allows the position of each configuration to be identified which is of absolute importance for optimally managing the operating process in the grapes withering room.

More in details, the grapes dehumidification room 2 is divided into sectors: in the shown example the two sectors S1 and S2.

Each sector S1, S2 comprises alternatively only one charging and discharging aperture (for the loading and unloading of the containers, according to the "first in- last out" mode), or, as in the example, two separate apertures, a charging one (11, 12) and a discharging one (13, 14, according to the "first in-first out" mode).

In operation, in order to isolate the room, such apertures are kept closed, for example, by using high-speed roll-up doors with Polyester coat and with a transparent window made of Polyvinylchloride, of the type known in se and reference is not made thereto.

Two adjacent sectors S1, S2 are divided by finned baffles 15.

Each sector S1, S2 is then divided into lanes preferably arranged parallel to the longest side of the sector S1, S2.

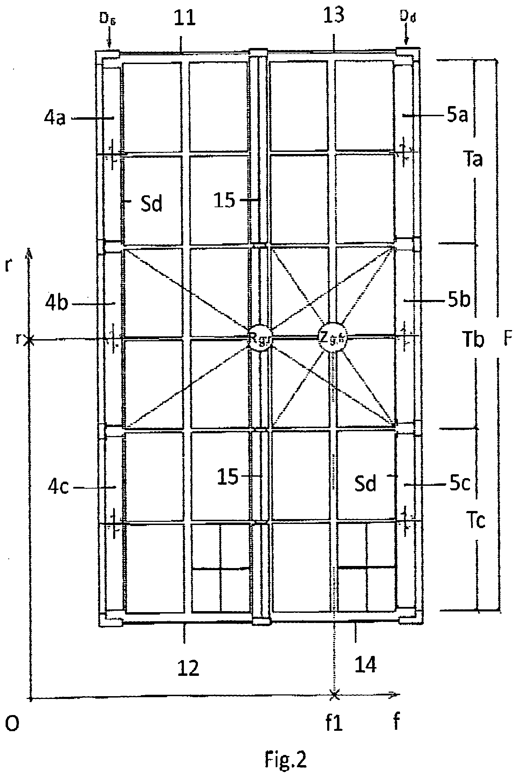

Each lane is intended to receive a row f1 of pallets P (see figs.2,3), with stacks of grapes containers C arranged on a single level or with stacks of boxes on more levels.

The width of the lanes is consistent both with the easy straight travel of pallets by means of transpallets, the traditional ones or those with on-board operator, and with the use of motorized roller tables 16 such as shown in fig.3.

Rows f1 are in turn divided into sections Ta, Tb, Tc whose length is a multiple of the length or width of the pallet, and tendentially, not lower than that of two pallets.

The whole adjacent modular sections Ta, Tb, Tc, of a sector S1, S2 are an area Z1, Z2.

Each area Z1, Z2 has a side equal to the length of a modular section Ta, Tb, Tc and the other side equal to the working width of a sector S1, S2.

Each area Z1, Z2 preferably comprises its own weighing systems or sensors, intended to detect the weight of the containers C corresponding to each of them; in this case the area is defined as an "equipped area". Each individual equipped area Z1, Z2 comprises a platform 18, as the floor, equipped with weight sensors, for example weighing dynamometric sensors 19 and having the same dimensions of the corresponding area Z1, Z2.

The platform 18 can be provided with motorized roller tables fastened thereon, having the motion reversibility or not.

The whole equipped or not equipped areas Z1, Z2, corresponding to each other, of adjacent sectors are a line R.

The line R is orthogonal to the longest side of the grapes withering room.

The general equipped area Z_{g;fr}, among all the areas of the room 2 (see fig.2) is therefore identified, in the reference system of Cartesian axes (f, r), by the abscissa (f) and ordinate (r).

The measurement, minus the tare, of the corresponding weight detected continuously, or at predetermined time periods, is associated thereto.

Therefore, the general equipped area Z_{g;fr} is actually used as a reference weighing unit for calculating the weight of grapes stored in each of its significant portions R and in the whole room.

The general line R_{g;r} among all those of the room is identified, in the reference system of Cartesian axes (f;r), as the whole equipped areas Z_{g;f,r} having the same ordinate (r).

The summation of the contemporaneous weighings corresponding to the individual equipped areas Z_{g;fr} having the same ordinate (r) therefore is the weight Pᵣ of all the grapes stored in the line with ordinate (r).

Therefore the general line R_{g;r} with ordinate (r), is the significant portion of the grapes withering room.

It plays a significant role for the articulated management of the dehydration process.

The summation of the contemporaneous weighings (Pᵣ), corresponding to the individual equipped lines (R_{g;r}) is the weight (P = ∑ᵣPᵣ) of all the grapes stored in the whole grapes withering room.

Optionally, pursuant to the width of the room, each area is divided into sub-areas, for convenience purposes.

The procedure and computational algorithm that will be described below, is not subjected to substantial changes, the weight of an area will be the sum of the weights of the sub-areas constituting it.

Now with reference to the description of the air flow generating means 3, they comprise a ventilation circuit for spreading the air to which an air treatment ventilation unit, or more briefly UTA, 30 is operatively connected.

The ventilation circuit comprises a primary duct 31, with a flow rate meter 32, secondary delivery and intake ducts 33, pairs of air diffusion modules 4a and 5a, 4b and 5b, 4c and 5c each one having a delivery and/or intake surface where an air passage area equal for each module of each pair is recognized, according to the teachings of the present invention.

The ventilation circuit comprises air flow generating means 3 and external air inlets 34 by means of which the air of the external environment is introduced into the room and discharged outside by the ventilation circuit, depending on needs and on the operating modes (consistent with the needs for the air flow reversal into the room).

Moreover, in order to monitor the grapes dehydration, the plant 1 comprises devices for measuring the thermo-hygrometric conditions of the processing air, arranged in the air ventilation circuit and all the functional actuators (gates, on-off valves and modulating valves) necessary for guaranteeing the operation.

Advantageously all the functional actuators are completed with their own flow rate meters, for detecting the air flow rate in the secondary ducts 33.

In a basic variant the UTA 30 comprises at least a condensate collecting system intended for collecting water drained from the grapes and at least a system for measuring the amount of water collected by said condensate collecting system, which will be described below in details.

The UTA 30, according to a preferred version, comprises: an air filter, a centrifugal ventilation system, with inverter, for the circulation of air, a heat exchanger with a cold fluid for dehumidifying it, a heat exchanger with a hot fluid or with heating elements for the post-heating thereof, a by-pass duct 36, with a on-off modulating valve 37, and a weighing device 40 shown in fig. 5 for the condensed water drained from the exhausted air, resulting from the grapes being treated with a closed ventilation cycle, as it will be described better below.

The positioning of the UTA 30, is just as an indication, since it can be installed even in a different manner and/or place; likewise the cold and hot fluid generators, as well as the weighing assembly 40 for the condensed water are not shown in fig.4, since they are not fundamental for the description of the operating criteria of the plant 1, object of the present invention, all their operating features being generally known.

Briefly, it is possible to have two operating modes: an open or closed cycle.

The conditioned air, processed by the UTA 30 (closed cycle), or the external air (open cycle), when used, is circulated into the room 2 by means of the primary duct 31 and a secondary duct 33, one of the two available ones.

The exhausted air is drawn by the other secondary duct 33 in order to be brought back to the UTA 30, in the case of a closed cycle operation, or in order to be discharged to the outside, when the ventilation occurs by an open cycle.

Ventilation means 30 are equipped with an inverter, operating in the arc of the optimum characteristic curve of the electric motor of the fan associated thereto, with the purpose of managing, suitably, the flow rate of the air flowing into the room 2.

The by-pass circuit 36, by the modulating valve 37, allows the flow rate of the air flowing in the grapes dehydration room 2 to be managed.

The modulation of the whole air flow rate inside the room 2 is therefore accomplished by said inverter and by the modulating valve 37, both of them working on the basis of the loss of weight of the grapes, in relation to the whole room, and interacting one with the other.

The air is spread into the room 2 by means of two flow diffusion assemblies each one comprising a module for each pair 4a, 5a, 4b, 5b, 4c, 5c.

The diffusion assemblies are opposite each other, specular and arranged one at each longitudinal walls of the room 2, with their operating surfaces parallel to the rows of stacks of containers C stored therein, and each one operating, alternately and on the basis of the sense of the air motion, both as air delivery assembly and as air intake assembly.

Finned baffles 15 are arranged between each sector S1, S2 and the following one and they serve for damping the turbulences of the uniform and horizontal air flow, that are generated by the passage thereof through the grapes boxes of the relevant sector, and for restoring the original condition.

The finned baffles 15 comprise an assembly of frames, having a width equal at least to the length or width of a pallet and are made of any material consistent with the specific application situation; baffles 15 preferably comprise fins whose pitch and width is a function both of the volumes and of the speed of the air to be conveyed.

Such baffles 15 therefore can be defined, due to the accomplished function, as real perturbation dampers in the air flow.

The pairs of modules 4a, 5a, 4b, 5b, 4c, 5c spreading air into the room 2, due to their configuration and due to the constituent characteristics of their delivery and/or intake surfaces for the air layers moving into the room 2, guarantee both the uniformity of the diffusion into the environment and the horizontal motion of the flow.

Each pair of modules 4a, 5a, 4b, 5b, 4c, 5c is connected to the secondary ducts 33, by means of corresponding pairs of modulating valves, preferably provided with air flow rate meters.

Each module of a pair 4a, 5a, 4b, 5b, 4c, 5c has a width equal to the width of any area Z of the room 2, with abscissa (f) and ordinate (r) and, each pair of opposite modules 4a, 5a, 4b, 5b, 4c, 5c delimits a length of any line (R) with ordinate (r).

Any module 4a, 5a, 4b, 5b, 4c, 5c spreading the air flowing into the dehumidification room 2 has a trapezoidal or rectangular section, in the direction of its height and it is made of a material consistent with the specific application it being also possible for it to have the air diffusion surface made of metal, perforated or microperforated, or made of a fabric, permeable to the air or having micro holes; the person skilled in the art can easily choose among these solutions on the basis of the flow rate of the conditioned or external air to be conveyed.

The modulation of the air flow rate in relation to any line (R), with ordinate (r), constituting the room, is accomplished by operating together the on-off valves of the individual modules 4a, 5a, 4b, 5b, 4c, 5c corresponding thereto, whose positioning, consistent with the air flow suitable for achieving the design losses in the weight of the grapes, is controlled and managed preferably in an electronic manner, for example by a simple PLC managing and optimizing the process, that to this end receives data from the air flow rate meters associated to the on-off valves desired to be controlled.

The inverter driving the fan, the modulating valve 37 and the pairs of modulating valves of each module 4a, 5a, 4b, 5b, 4c, 5c are the actuators, that guarantee the balance in the general and localized ventilation into the room 2, suitable for reaching, in the predetermined time range, the withering or dehydration of the grapes, keeping in the room 2 the suitable thermo-hygrometric conditions.

The proper and harmonious superposition of the effects, interconnected with the contemporaneous operation of the inverter, of the modulating valve 37 and of the pairs of modulating valves of each module 4a, 5a, 4b, 5b, 4c, 5c is preferably achieved by a process and management and optimization PLC, that performs the processing of the specific measurements coming from the room, the articulated interfacing among the achieved results and the transmission of instructions to the actuators.

The reversal of the air motion, into the grapes dehumidification room, is accomplished by motorized gates, for the automatic on-off regulation of the air flows in the secondary delivery and intake ducts 33, connected to the UTA 30 and with the external air ducts 34, that operate, alternately, for drawing pre-filtered new external air, and for discharging the exhausted air.

Such ducts, connected to the outer environment, are arranged upstream the UTA 30.

The reversal of the air motion can be modified in any moment during the process, depending on what is good for the grapes withering, in relation to the development of the basic mathematical functions, that manage the grapes dehumidification process and to which reference will be made later.

With reference to fig.4, the suitable regulation of the secondary ducts 33 and of the intake ducts 34 and of the bypass duct 37 leads to the different operating modes of the ventilation system of the room 2, under standard conditions: air flow from the right to the left with closed cycle or open cycle or air flow from the left to the right with closed or open cycle.

The reversal of the air flow into the grapes dehumidification room is managed by the process PLC on the basis of a predetermined timing or on the basis of parameters denoting the dehydration level of the grapes.

More in details, with reference thereto, the plant comprises at least one sensor for detecting at least an operating parameter indicative of the dehydration level of the grapes; therefore the air flow generating means are operatively connected to the sensor such to control said air flow on the basis of the operating parameter.

Such parameters advantageously can be of two types: direct or indirect.

Direct parameters comprise the measurement of the weight and of the ponderal change over time, by means of the devices described above.

On the contrary the indirect parameters are obtained by weighing the amount of condensed and drained water, with the room 2 under operating conditions with a controlled and managed thermo-hygrometric condition.

With reference to fig.5 the system 40 weighing the condensed water, for example, comprises: two identical tanks 41, 42 with the same capacity, mounted on dynamometric sensors 43, 44 and each one provided with a discharge cock preferably automatically operated.

The two tanks 41, 42 are connected to a pipe 45 transferring the condensed water from the collection basin of the UTA 30, regulated by a two-way cock 46, preferably automatically operated.

The two tanks 41, 42 operate alternately one with respect to the other; specially when the tank 41 is weighing its discharge cock is closed and the two-way cock 46 sends the water to the tank 41; the tank 42 is contemporaneously in the discharge condition, with its discharge cock in the open state. The situation is similar, but in the opposite manner, when the tank 42 is in the weighing phase.

The results from each weighing operation relate to the whole amount of grapes in the room 2 and are valid both whether there are provided equipped areas or not; in this latter case such results are the only device for managing the conditioning state of the whole room 2, that is the relative humidity, temperature, ventilation.

Preferably the measurements of the performed weighing operations are transferred to the process PLC managing and optimizing the process, that will operate accordingly, such to set the air flow generating means in order to control the air flow on the basis of the measurement of the condensed water.

The second function of the indirect weighing operation of the loss in weight of the grapes is to allow the comparison with direct weighing operations, in relation to the plant 1 with equipped areas, made in the same time period, in order to find mutual measurement differences and in order to carry out the adjustments.

Even such comparisons are performed by the PLC managing and optimizing the process.

Therefore the air flow generating means described above can be set in order to control the air flow on the basis of the measurement of said temperature sensor or of said humidity sensor and/or of the measurement of the weight sensor of the condensed water or of a function of such measurements.

In the case the plant comprises (such as in the shown example) a plurality of first diffusion modules for introducing into the plant a plurality of air flows and a plurality of second diffusion modules for drawing said plurality of air flows, each pair of diffusion modules is individually feedable by the air flow generating means in order to individually reverse each one of said plurality of air flows on the basis of at least one operating parameter.

As regards the quantities setting the conditioning state, at the time (0), of the grapes withering room (temperature T₀, relative humidity U₀% and amount of air F₀ to be circulated into the room), they can be determined by the usual calculation procedures used for the study of conditioned air treatment in any room, suitable for a specific activity, paying attention that, in the case of grapes, the temperature, of the room and of the ventilation air, remains, tendentially, about at 18°C, except that the wine expert decides in a different manner or that real objective situations require to change such reference.

The temperature and the relative humidity of the air and of the room are monitored by sensors such as thermometers and transmitting hygrometers suitably fitted along the fixed path of the air passage, for example in the primary air diffusion duct 31, at the finned baffles 15, arranged between subsequent sectors S1, S2 of the room 2, at the modules 4a, 5a, 4b, 5b, 4c, 5c.

The regulation of the temperature and humidity of the air introduced into the room 2 is based on the measurements of two types of sensors, specially thermostat and humidistat arranged downstream the air treatment unit UTA 30 in the primary diffusion duct 31 which sensors, directly or electrically mediated by said PLC, allow the actuators of the air dehumidification and post-heating circuits respectively to be controlled.

In both cases, and always, the corresponding measurements of interest for the dehydration process are transmitted to the PLC in order to be processed and to be efficaciously operatively managed and employed.

As regards the process, it will be described below in the detail of its phases.

Generally the grapes withering process by dehydration, according to the present invention comprises at least the steps of:
a- arranging grapes into a plant isolatable from the outer environment,
b- sending an air flow having a prevalent direction on said grapes by means of a first diffusion module,
c- drawing said air flow by means of said second diffusion module.

The process provides said first diffusion module and said second diffusion module to substantially have the same air passage area and to be arranged facing each other along said prevalent direction.

The process according to the present invention further comprises the steps of:
- measuring a reduction in the overall weight of the grapes held in said plant,
- controlling said air flow on the basis of said measurement.

The measurement phase in turn further comprises the steps of:
- collecting, particularly by a condensation operation, the water contained in the air flow drawn by said second diffusion module,
- measuring the amount of collected water.

The measurement phase further comprises the steps of:
- arranging all the grapes on one or more floor-mounted weighing machines,
- determining the weight measured by said one or more weighing machines.

Advantageously, generally, the process comprises also the step of reversing the direction of said air flow, such to make the grapes dehydration uniform.

Finally, the process according to the present invention comprise the steps of:
- drawing an air flow rate from an outer environment to an environment wherein said grapes are housed;
- dehumidifying and/or changing the temperature by heating or cooling said air flow rate before sending it onto said grapes.

More in details, the operating process is divided into the following phases, involving the whole room 2 and the individual significant portions R, in which it is divided.

In the description, below, the significant portion R can be also defined as salient or can be written without the adjectives "significant" or "salient".

The process comprises a preliminary step for determining the configuration and setting parameters, at the starting moment of the process (subscript "0").

The following parameters are especially defined:
- the average sugar level (Bx°₀) of the provided harvested grapes and the average sugar level (Bx°ₑ) to be achieved at the end (subscript "e") of the process
- the "corrected" measurement of the weight [Pᵣ₀ = P ᵣ₀ (Bx°₀)], of the grapes to be withered of each significant portion R, constituting the room 2
- the calculation of the overall amount of grapes, subjected to dehydration (P₀= ∑ᵣPr₀)
- the calculation of the overall amount of water to be removed [Q₀ₑ=Q₀;(P₀; ΔBx°)], from the beginning "0" to the end "e" of the process
- the expected length of time of the process (d₀) for removing the amount of water Q₀ₑ
- the overall amount of water to be removed, on average, in the unit of time (q₀ₑ=Q₀ₑ :d₀)
- the temperature (T₀), relative humidity (U₀%) and air flow rate of the ventilation system (F₀) in compliance with information acquired in the previous operations.

A step monitoring the actual situation, in the room, is subsequently performed at the preferred moment "t" (subscript "t"), following the beginning of the process "0"
by measuring and/or calculating
- the time range dₜ (dₜ<d₀) from "0" to "t"
- the grape weight (Pᵣₜ) of each portion (R)
- the overall weight of the grapes in the room (Pₜ = ∑ᵣPᵣₜ)
- the overall amount of water actually removed or the loss in weight of the grapes [Q₀ₜ=Q₀ₜ(P₀;Pₜ)], in the time range dₜ,
- the overall amount of water removed, or loss in weight, in the unit of time(q₀ₜ=Q₀ₜ:dₜ), in relation to the time range dₜ,
- the amount of water actually removed or loss in weight of each portion R of the room [Qᵣ₀ₜ=Qᵣ₀ₜ(P₀ₜ;Pᵣₜ)]
- the amount of water removed or loss in weight of each portion R of the room in the unit of time (qᵣ₀ₜ=Qᵣ₀ₜ:dₜ), in the time range dₜ
- the temperature (Tₜ), relative humidity (Uₜ%) and the air flow rate of the ventilation system (Fₜ). Therefore the basic mathematical functions for managing the process and the criteria for their use in order to achieve their optimization are defined: the mathematical functions are
- Xᵣ₀ₜ =qᵣ₀ₜ₋q₀ₑ<=>0 or yᵣ₀ₜ=qᵣ₀ₜ:q₀ₑ<=>1, regarding each significant portion R, in which the room is divided;
   x₀ₜ=q₀ₜ-q₀ₑ<=>0 or y₀ₜ=q₀ₜ:q₀ₑ<=>1, regarding the whole room;
   the optimization criteria are
- tending functions "x" to "0" and tending functions "y" to "1".

Therefore interventions are made for adjusting and/or correcting the actual situation, by automatically selectively resetting, at moment "t", the environmental parameter or parameters (temperature, relative humidity, air flow rate of the whole room, the air flow rate of each significant portion), for maintaining the conditions of the reference configuration expressed by the mathematical functions [xᵣ₀ₜ=qᵣ₀ₜ₋q₀ₑ=0 or yᵣ₀ₜ=qᵣ₀ₜ:q₀ₑ=1, for each significant portion R of the room ; x₀ₜ=q₀ₜ-q₀ₑ=0 or y₀ₜ=q₀ₜ:q_{0c}=1, for the whole room.

In the case it is not possible, by the resetting operation, to contemporaneously obtain the desired conditions, xᵣ₀ₜ=0 or yᵣ₀ₜ=1 for each significant portion (R) of the room, or x₀ₜ=0 or y₀ₜ=1 for the whole room 2, interventions are made for changing the time length of the process (d₀).

If the plant is provided with an electronic control using a process PLC, it is possible to set it for coordinating the operating procedure, previously described.

It has to be noted that the "correction" of the real weighing [Pᵣ₀)=Pᵣ₀(Bx°₀)], of the amount of grapes in the room 2, is necessary in order to consider, on the basis of the experience and of historical data, the percentage of inerts not involved in the reduction of Bx° of the berries; such correction (equivalent to a tare) affects also the following measurements.

Moreover it has to be noted that the mathematical expressions expressed in the general form h=h(m;n) point out that the quantity h is a function, more or less complex, of quantities m and n. The scheduled loss in weight of the grapes (Q₀ₑ) in the time range (d₀), the really occurred loss in weight of the grapes (Q₀ₜ) in the time range (dₜ), and their mutual interaction allow the grapes withering process to be directed to the optimization of the final result.

For the interventions during the operation, on the regulating actuators, the basic mathematical functions have an absolute importance, with reference
to the whole fruit storage room : x₀ₜ=q₀ₜ-q₀ₑ<=>0 or y₀ₜ₌q₀ₜ:q₀ₑ<=>1, which have to tend to keep, during the process, the values x₀ₜ=0 and y₀ₜ=1 respectively;
to each line R of the room : xᵣ₀ₜ =qᵣ₀ₜ-q₀ₑ<=>0 or yᵣ₀ₜ =qᵣ₀ₜ:q₀ₑ<=>1, which have to tend to keep, during the process, the values xᵣ₀ₜ=0 and yᵣ₀ₜ=1 respectively.

Adjustments and/or corrections, harmoniously interacting one with the other, are necessary for the previous conditions to be satisfied : the individual and/or combined ones of the thermo-hygrometric conditions (temperature, relative humidity) and of the ventilation (total air flow rate) in the case of the whole fruit storage room, of the ventilation (localized air flow rate), even superimposed on the previous interventions, in the case of each line R of the room.

It may occur that some evaluations considered a priori by the wine expert as valid main points of the grapes withering process, do not allow the results required by the basic mathematical functions of the process to be achieved, even if all the flexible available operating arrangements are performed.

In this case, the time length of the process (d₀) has to be changed according to the new emerging requirements, by increasing or decreasing it, just as much as it is needed, in order to achieve the optimization targets of the grapes withering process.

The process PLC managing and optimizing the dehumidification process of the grapes, stored in the room, is provided with a specific program suitable for managing each aspect of the operating management: setting the reference parameters at the process start-up, monitoring the actual situation during the process, arranging the basic mathematical functions for the iterative calculation of the operating data and of their use modes, arranging interventions for adjusting and/or changing the condition of the climate into the whole room and/or locally in portions thereof or of the process length, in line with the optimization target, transmitting and controlling the actuating instructions sent to the devices or actuators of the plant, intended to optimize the climatic condition of the room and to obtain the proper grapes dehumidification at the right moment, organizing all information, coming from the room, and the results deriving from the calculations into data strings, as a function of time, with the aim of having available the complete trace of the process development, of the performed corrections and of the readiness of the plant response to comply with the new conditions, the proper use of all the derived usable data of the previous activities.

Obviously several modifications to what described up to now are possible, all to be considered as the object of the present invention.

Particularly, in one embodiment, the invention relates to a technological process characterized by the following operating activities: harvesting the grapes in the vineyard and placing them, on one layer or not, into boxes or trays whose dimensions are suitable in relation to those of the stacking pallets; detecting the sugar content of the grapes at the moment of harvesting (Bx°₀); defining the sugar content to be achieved at the end of the grapes withering process (Bx°ₑ); defining the predictable length of the withering process (d₀); storing the pallets, suitably aligned and arranged, into a grapes withering room (or even *fruit storage room*); dehydrating the grapes, by an air stream, conditioned or not conditioned, having a variable flow rate and having a horizontal and reversible uniform motion; directly and indirectly measuring, in real time, the grapes weight, and the variations thereof, during the development of the withering process; managing the withering process, on the basis of the progressive variations of the grape weight, by basic mathematical functions whose aim is to bring the water provided at the beginning in the grapes to the desired final value; using said functions for controlling the climatic condition (temperature, relative humidity and ventilation) for the whole room and the ventilation of each salient portion of the room.

According to one embodiment, the use of a process PLC managing and optimizing the process is provided which is suitably programmed
- for setting the grapes withering process
- for gathering and progressively processing the measurements coming from the room
- for performing the progressive calculation of said basic mathematical functions
- for sending instructions for managing the climatic parameters, to the actuating working equipment and for correcting the effects, on the basis of the feed-back, such that the water amount of the grapes tends to the desired value
- for correcting, possibly if necessary and just as much as it is needed, the time length (d₀) of the process, till reaching the desired optimization.

According to an embodiment, the invention relates to a plant with a grapes dehydration room, provided with a lay-out, for storing the grapes pallets to be treated, that makes reference to a system of Cartesian axes (f;r) with origin "O" and of systems for directly weighing the stored grapes, which room is characterized in:
- the division into sectors (S), parallel to its longest side, separated by finned baffles (Dₐ), each one provided with lanes or rows (F), made of sections (T) and of areas (Z);
- areas (Z), with coordinates (f;r), "equipped" with platforms (P_{f}), even provided with motorized roller tables (Pᵣₘ), with a reversible or not reversible motion, equipped with dynamometric sensors (d_{z}) for directly measuring and transmitting, to the PLC, the variations in the weight associated thereto, or "not equipped" ones (without platforms with dynamometric sensors);
- lines (R), made of whole the areas (Z), having the same ordinate (r).

According to one embodiment the invention relates to a plant with ventilation of the withering room, by conditioned or not conditioned air, having a variable flow rate, a horizontal continuous flow, reversibility of the motion direction and with closed cycle or open cycle operation, which ventilation is characterized by:
- a uniformly spread distribution of the air in the grapes withering room;
- a uniform motion orthogonal to the rows of grapes pallets, stored in the room.

According to an embodiment, the invention relates to a plant with the diffusion of the ventilating air, conditioned or not conditioned, into the dehydration room, by means of air treatment units (UTA), ducts, diffusers, measurement devices and devices for suitably carrying out the process, which air diffusion is characterized by an operating assembly composed of:
- ventilation air treatment unit (UTA); a primary duct (Cₚ) equipped with a flow rate meter (MP);
- secondary ducts (Cₛ), for alternatively supplying and drawing air; air diffusion systems (D_{d}; Dₛ), composed of modules (M_{dk}, Mₛₖ), provided with delivery and/or intake surfaces (S_{d});
- finned baffles (Dₐ); external air inlets (Aₑ); functional actuators composed of on-off motorized gates (S) and of pairs of modulating valves (V_{dk}; Vₛₖ), provided with their own flow rate meters (M_{pdk}; Mₚₛₖ);
- measurement devices, for all the quantities necessary for managing and controlling the thermo-hygrometric conditions of the room and of the air (not shown in tables), coming from the UTA, under closed or open circuit conditions,
- transmission of measurements to the process PLC managing the process.

According to one embodiment, the invention relates to a plant with an air treatment unit (UTA) for dehydrating grapes, provided with devices, inverters and by-pass, for changing (modulating) the flow rate of the air introduced in the whole room, and with a device continuously measuring the water drained during the process, which unit (UTA) is characterized by:
- filter for the introduced air;
- centrifugal fan with inverter, for the air diffusion into the room;
- heat exchanger with cold fluid for dehumidifying the air;
- heat exchanger with hot fluid or with heating elements for the post-heating of the dehumidified air;
- by-pass (B), with a modulating valve (V_{B});
- weighing device for the condensed water, drained from the exhausted air, coming from the treatment of the grapes, under conditions with closed ventilation cycle and with the transmission of the measurements to the operating PLC;
- the coordinated resetting, continuously and/or at scheduled time periods, of the operation of heat exchangers, inverters and by-pass.

According to one embodiment, the invention relates to a plant with the modulation of the flow of air flowing at each portion (R), constituting the room, which modulation is characterized by:
- use of modulating valves (V_{dk}; Vₛₖ) with their own flow rate meters (M_{pdk}; Mₚₛₖ), respectively, arranged on the secondary ducts (Cₛ);
- transmission of the actual situation to the operating PLC;
- the coordinated resetting, continuously and/or at scheduled time periods, of the modulating valves.

According to an embodiment, the invention relates to a plant with the reversal of the air motion into the dehumidification room, which reversal is characterized by the use of:
- on-off motorized gates (Sᵢ) for the automatic regulation of air flows in the supply and/or intake secondary ducts (Cₛ), connected to the UTA;
- two external air ducts (Aₑ), operating, alternately, for drawing pre-filtered new air, and for discharging the exhausted air, connected to the outside environment, provide with on-off gates, and suitably arranged in the circuit spreading the air in the room;
- transmission of the actual situation to the operating PLC;
- operating frequency of the reversal of the air flow at scheduled or not scheduled time periods.

According to one embodiment, the invention relates to a plant with a direct measurement of the weight loss of the grapes, treated in the dehumidification room, which measurement is characterized by:
- a continuous detection of the pallet weight, with grapes boxes, arranged on areas (Z), with abscissa (f) and ordinate (r), of each sector (S), provided with weight sensors, for calculating the loss in weight of the grapes along each line (R,) with ordinate (r), or in all the fruit storage room, and for obtaining also information about the weight changes of the grapes in any sector (S).

According to one embodiment, the invention relates to a plant with an indirect measurement of the loss in weight of the grapes, treated in the dehydration room, which measurement is characterized by:
- a continuous detection of the weight of the amount of condensed water drained by the conditioning system (UTA) of the withering room, which provides a loss in weight of the grapes in relation to the whole fruit storage room, both whether it is equipped (with platforms provided with dynamometric sensors) or not equipped (without platforms provided with dynamometric sensors).

According to one embodiment, the invention relates to a plant with the management of the thermo-hygrometric and ventilation conditions of the room and of the ventilation of each salient portion (R), constituting it. The plant is characterized by the use of a process PLC managing and optimizing the process, equipped with a specific program for:
- setting the reference data of the grapes withering process;
- continuously gathering information from the fruit storage room during the development of the dehydration process (temperature and relative humidity of the air and flow rate of the ventilation system, in relation to the whole room and to each salient portion R thereof);
- detecting weights and calculating the changes in the grapes weight, related to each significant portion of the room and to the whole room;
- identifying the current condition of the actuating, operating, devices arranged for optimizing the process;
- availability of all the calculation functions for processing gathered information and for updating, at all times, the mathematical functions;
- use of the basic mathematical functions for performing the selective time procedure for sending the instructions to the operating regulating actuators for the climatic conditions related to the general line (R) or to the whole fruit storage room, with the object of bringing the grapes weight to the desired value by changing, when necessary, even the scheduled length (d₀) of the dehydration process;
- precise and optimal feed-back management;
- complete traceability of the process development;
- processing and suitable use all the derived usable data of the previous activities.

## Claims

1. Plant (1) for grapes withering by dehydration, comprising:
- a dehumidification room (2) isolatable from an outer environment and intended to house grapes containers (C) stacked on a row of pallets, wherein said room (2) is defined by perimetral floor, ceiling and shell walls, said shell walls being intended for joining together said ceiling and floor walls,
- air flow generating means (30) comprising a ventilation circuit and a first and a second diffusion module (4a,5a,4b,5b,4c,5c) for said air flow in said room (2),
- at least one sensor for detecting at least one operating parameter indicative of the grapes dehydration level, said airflow generating means being operatively connected to said at least one sensor such to control said airflow on the basis of said at least one operating parameter, **characterized in that**
- said first and said second diffusion modules (4a,5a,4b,5b,4c,5c) are arranged facing each other on said shell walls at the opposite sides of the room (2) and are intended for the forced supply of an air flow and for the corresponding intake thereof respectively, said first and said second diffusion modules (4a,5a,4b,5b,4c,5c) being substantially provided with the same air passage area, so as to obtain a uniform air motion that is horizontal and orthogonal to the row of pallets,
- said air flow generating means being intended to send said air flow from said first diffusion module to said second diffusion module and vice versa, and said air flow generating means being controllable such to reverse the direction of said air flow.

2. Plant according to claim 1, wherein each one of said diffusion modules (4a,5a,4b,5b,4c,5c) comprises a case (400a) having a first section uniformly tapering from one end to the other one and that remains constant along a second section transverse to said first section, said case comprising a delivery wall (410a) provided with a plurality of holes (420a) for the air passage, said diffusion modules (4a,5a,4b,5b,4c,5c) being preferably identical one to the other; said first section being preferably obtained by cutting said case with a vertical plane.

3. Plant (1) according to claim 1 or 2, wherein the air flow generating means are configured to periodically reverse the air flow during a dehydration period on the basis of a predetermined timing or on a timing depending on operating parameters.

4. Plant (1) according to any of the preceding claims, further comprising at least a collecting system for the condensed water, and
at least a system measuring the amount of water collected by said collecting system.

5. Plant according to claim 4, said air flow being preferably intended to be controlled on the basis of the measurement by said system measuring the amount of collected water.

6. Plant (1) according to any of the preceding claims, further comprising at least one weight sensor (19) for detecting the weight of the containers (C) housed at an area (Z) of said room (2), and wherein said air flow generating means are settable in order to control said air flow on the basis of the measurement of said weight sensor (19).

7. Plant (1) according to any of the preceding claims, further comprising at least one of a temperature sensor and a humidity sensor for detecting at least an operating parameter on the basis of the temperature and/or humidity of the air into the room (2), and wherein said air flow generating means are settable in order to control said air flow on the basis of the measurement of said temperature sensor or of said humidity sensor.

8. Plant (1) according to any of the preceding claims, wherein said air flow generating means (3) comprise an air treatment ventilation unit UTA (30) operatively connected to said air ventilation circuit and at least two intake and/or discharge ducts for the air of an external environment in said room (34) for introducing or discharging ambient air into or from said ventilation circuit, said air treatment ventilation unit UTA (30) preferably comprising at least one of an air filter, a centrifugal ventilation system with inverter, a heat exchanger with cold fluid for dehumidifying the air, a heat exchanger with hot fluid or with heating elements for the post-heating of said air, a by-pass duct (36) regulatable by a modulating valve (37) and a weighing device (40) for the condensed water.

9. Plant (1) according to claim 8, **characterized in that** said weighing device (40) for the condensed water comprises two alternately fillable tanks (41, 42) mounted on corresponding sensors (43, 44) for detecting the weight of each tank (41, 42), said two tanks (41,42) being connected by a pipe (45) for the transfer to a condensed water collecting basin of said air treatment ventilation unit UTA (30), in order to detect an indirect operating parameter indicative of a dehydration level of said grapes, said plant (1) preferably comprising a plurality of first diffusion modules for intruding in the plant a plurality of air flows and further comprising a plurality of second diffusion modules for drawing said plurality of air flows, and in which plant the air flow generating means are intended to modulate each one of said plurality of air flows on the basis of at least an operating parameter and/or to reverse all the plurality of said air flows.

10. Plant (1) according to claim 9, wherein said at least one operating parameter is a measurement of the amount of water provided in an air flow of said plurality of air flows, and in which preferably to each air flow an amount of grapes is associated and wherein said at least one operating parameter is a measurement of the weight of said amount of grapes.

11. Process for grapes withering by dehydration, comprising at least the steps of:
a- arranging grapes into a plant isolatable from the outer environment, the plant comprising a dehumidification room (2) isolatable from an outer environment and intended to house grapes containers (C) stacked on a row of pallets, wherein said room (2) is defined by perimetral floor, ceiling and shell walls, said shell walls being intended for join together said ceiling and floor walls,
b- sending an air flow on said grapes by means of a first diffusion module,
c- drawing said air flow by means of a second diffusion module,
**characterised in that**
said first diffusion module and said second diffusion module substantially have the same air passage area and are arranged on said shell walls at the opposite sides of the room (2) facing each other along said prevalent direction so as to obtain a uniform air motion that is horizontal and orthogonal to the row of pallets,
and **in that** the process further comprises the step of reversing the direction of said air flow.

12. Process according to claim 11, comprising the steps of:
- measuring a reduction in the overall weight of the grapes held in said plant,
- controlling said air flow on the basis of said measurement.

13. Process according to claim 12, wherein said measurement comprises the steps of:
- collecting, particularly by a condensation operation, the water contained in the air flow drawn by said second diffusion module,
- measuring the amount of collected water
wherein said measurement preferably comprises the steps of:
- arranging all the grapes on one or more floor-mounted weighing machines,
- determining the weight measured by said one or more weighing machines.

14. Process according to any of the claims 11 to 13, preferably further comprising the steps of:
- drawing an air flow rate from an outer environment to an environment wherein said grapes are housed;
- dehumidifying and/or changing the temperature by heating or cooling said air flow rate before sending it onto said grapes,
said process being preferably made in a plant (1) according to one or more of the claims 1 to 10.

## Patentansprüche

1. Vorrichtung (1) zur Austrocknung von Trauben mittels Wasserentzug, umfassend:
- einen Entfeuchtungsraum (2), der von einer äußeren Umgebung isolierbar ist und dafür vorgesehen ist, Traubenbehälter (C), die auf einer Palettenreihe gestapelt sind, aufzunehmen, wobei der Raum (2) durch einen Umfangsboden, eine Decke und Verschalungswände definiert ist, wobei die Verschalungswände dafür vorgesehen sind, die Decke und die Bodenwände miteinander zu verbinden,
- eine Luftstrom-Erzeugungseinrichtung (30), die einen Ventilationskreis und ein erstes und ein zweites Diffusionsmodul (4a, 5a, 4b, 5b, 4c, 5c) für den Luftstrom in dem Raum (2) aufweist,
- wenigstens einen Sensor zum Erfassen wenigstens eines Betriebsparameters, der das Dehydrierungsniveau der Trauben angibt, wobei die Luftstrom-Erzeugungseinrichtung operativ mit dem wenigstens einen Sensor verbunden ist, um den Luftstrom auf der Grundlage des wenigstens einen Betriebsparameters zu steuern,
**dadurch gekennzeichnet, dass**
- das erste und das zweite Diffusionsmodul (4a, 5a, 4b, 5b, 4c, 5c) einander gegenüberstehend an den Verschalungswänden auf den entgegengesetzten Seiten des Raums (2) angeordnet sind und dafür vorgesehen sind, einen Luftstrom erzwungen zuzuführen bzw. diesen entsprechend einzulassen, wobei das erste und das zweite Diffusionsmodul (4a, 5a, 4b, 5b, 4c, 5c) im Wesentlichen mit der gleichen Luftdurchgangsfläche versehen sind, um eine gleichmäßige Luftbewegung zu erhalten, die zur Palettenreihe horizontal und orthogonal ist,
- die Luftstrom-Erzeugungseinrichtung dafür vorgesehen ist, den Luftstrom vom ersten Diffusionsmodul zum zweiten Diffusionsmodul zu senden und umgekehrt, und wobei die Luftstrom-Erzeugungseinrichtung steuerbar ist, um die Richtung des Luftstroms umzukehren.

2. Vorrichtung nach Anspruch 1, wobei jedes der Diffusionsmodule (4a, 5a, 4b, 5b, 4c, 5c) ein Gehäuse (400a) mit einem ersten Querschnitt, der von einem Ende zum anderen gleichmäßig zuläuft und entlang einem zweiten Querschnitt quer zum ersten Querschnitt konstant bleibt, aufweist, wobei das Gehäuse eine Zufuhrwand (410a), die mit einer Mehrzahl von Löchern (420a) für den Luftdurchgang versehen ist, aufweist, wobei die Diffusionsmodule (4a, 5a, 4b, 5b, 4c, 5c) vorzugsweise identisch sind, wobei der erste Querschnitt vorzugsweise durch Schneiden des Gehäuses in einer vertikalen Ebene erhalten wird.

3. Vorrichtung (1) nach Anspruch 1 oder 2, wobei die Luftstrom-Erzeugungseinrichtung dafür ausgelegt ist, den Luftstrom während einer Dehydrierungsperiode auf der Grundlage einer vorgegebenen Zeitsteuerung oder auf der Grundlage einer von Betriebsparametern abhängigen Zeitsteuerung periodisch umzukehren.

4. Vorrichtung (1) nach einem der vorhergehenden Ansprüche, welche ferner Folgendes aufweist:
wenigstens ein Sammelsystem für das kondensierte Wasser und
wenigstens ein System, das die durch das Sammelsystem gesammelte Wassermenge misst.

5. Vorrichtung nach Anspruch 4, wobei der Luftstrom vorzugsweise auf der Grundlage der Messung durch das die gesammelte Wassermenge messende System gesteuert werden soll.

6. Vorrichtung (1) nach einem der vorhergehenden Ansprüche, welche ferner wenigstens einen Gewichtssensor (19) zum Erfassen des Gewichts der in einem Bereich (Z) des Raums (2) untergebrachten Behälter (C) aufweist, wobei die Luftstrom-Erzeugungseinrichtung einstellbar ist, um den Luftstrom auf der Grundlage der Messung des Gewichtssensors (19) zu steuern.

7. Vorrichtung (1) nach einem der vorhergehenden Ansprüche, welche ferner wenigstens einen von einem Temperatursensor und einem Feuchtigkeitssensor zum Erfassen wenigstens eines Betriebsparameters auf der Grundlage der Temperatur und/oder der Feuchtigkeit der in den Raum (2) eintretenden Luft aufweist, wobei die Luftstrom-Erzeugungseinrichtung einstellbar ist, um den Luftstrom auf der Grundlage der Messung des Temperatursensors oder des Feuchtigkeitssensors zu steuern.

8. Vorrichtung (1) nach einem der vorhergehenden Ansprüche, wobei die Luftstrom-Erzeugungseinrichtung (3) eine Luftbehandlungs-Ventilationseinheit UTA (30) aufweist, die operativ mit dem Luftventilationskreis und wenigstens zwei Einlass- und/oder Auslasskanälen für die Luft der äußeren Umgebung in dem Raum (34) zum Einlassen von Umgebungsluft in den Ventilationskreis oder zum Auslassen der Umgebungsluft aus dem Ventilationskreis verbunden ist, wobei die Luftbehandlungs-Ventilationseinheit UTA (30) vorzugsweise wenigstens einen von einem Luftfilter, einem Zentrifugalventilationssystem mit einem Inverter, einem Wärmetauscher mit einem kalten Fluid zum Entfeuchten der Luft, einem Wärmetauscher mit einem heißen Fluid oder mit Heizelementen für das Nachwärmen der Luft, einem Umgehungskanal (36), der durch ein modulierendes Ventil (37) regulierbar ist, und einer Wiegevorrichtung (40) für das kondensierte Wasser aufweist.

9. Vorrichtung (1) nach Anspruch 8, **dadurch gekennzeichnet, dass** die Wiegevorrichtung (40) für das kondensierte Wasser zwei abwechselnd befüllbare Tanks (41, 42) aufweist, die an entsprechenden Sensoren (43, 44) angebracht sind, um das Gewicht jedes Tanks (41, 42) zu erfassen, wobei die beiden Tanks (41, 42) durch ein Rohr (45) zur Übertragung zu einem Kondenswasser-Sammelbecken der Luftbehandlungs-Ventilationseinheit UTA (30) verbunden sind, um einen indirekten Betriebsparameter zu erfassen, der das Dehydrierungsniveau der Trauben angibt, wobei die Vorrichtung (1) vorzugsweise eine Mehrzahl erster Diffusionsmodule zum Einbringen einer Mehrzahl von Luftströmen in die Vorrichtung und ferner eine Mehrzahl zweiter Diffusionsmodule zum Ziehen der Mehrzahl von Luftströmen aufweist, wobei in der Vorrichtung die Luftstrom-Erzeugungseinrichtung dafür vorgesehen ist, jeden der Mehrzahl von Luftströmen auf der Grundlage zumindest eines Betriebsparameters zu modulieren und/oder alle von der Mehrzahl der Luftströme umzukehren.

10. Vorrichtung (1) nach Anspruch 9, wobei der wenigstens eine Betriebsparameter eine Messung der in einem Luftstrom von der Mehrzahl von Luftströmen bereitgestellten Wassermenge ist und wobei vorzugsweise jedem Luftstrom eine Traubenmenge zugeordnet wird und wobei der wenigstens eine Betriebsparameter eine Messung des Gewichts der Traubenmenge ist.

11. Verfahren zur Austrocknung von Trauben mittels Wasserentzug, welches zumindest die folgenden Schritte umfasst:
a- Anordnen von Trauben in einer von der äußeren Umgebung isolierbaren Vorrichtung, wobei die Vorrichtung einen Entfeuchtungsraum (2) aufweist, der von einer äußeren Umgebung isolierbar ist und dafür vorgesehen ist, Traubenbehälter (C), die auf einer Palettenreihe gestapelt sind, aufzunehmen, wobei der Raum (2) durch einen Umfangsboden, eine Decke und Verschalungswände definiert ist, wobei die Verschalungswände dafür vorgesehen sind, die Decke und die Bodenwände miteinander zu verbinden,
b- Senden eines Luftstroms zu den Trauben durch ein erstes Diffusionsmodul,
c- Abziehen des Luftstroms durch ein zweites Diffusionsmodul,
**dadurch gekennzeichnet, dass**
das erste Diffusionsmodul und das zweite Diffusionsmodul im Wesentlichen die gleiche Luftdurchgangsfläche aufweisen und auf den entgegengesetzten Seiten des Raums (2), die einander entlang der vorherrschenden Richtung gegenüberstehen, angeordnet sind, um eine gleichmäßige Luftbewegung zu erhalten, die horizontal und orthogonal zu den Palettenreihen ist,
und dass das Verfahren ferner den Schritt des Umkehrens der Richtung des Luftstroms aufweist.

12. Verfahren nach Anspruch 11, welches folgende Schritte aufweist:
- Messen einer Verringerung des Gesamtgewichts der in der Vorrichtung gehaltenen Trauben,
- Steuern des Luftstroms auf der Grundlage der Messung.

13. Verfahren nach Anspruch 12, wobei die Messung folgende Schritte umfasst:
- Sammeln, insbesondere durch einen Kondensationsvorgang, des im Luftstrom, der durch das zweite Diffusionsmodul gezogen wird, enthaltenen Wassers,
- Messen der gesammelten Wassermenge,
wobei die Messung vorzugsweise folgende Schritte umfasst:
- Anordnen aller Trauben auf einer oder mehreren am Boden angebrachten Wiegemaschinen,
- Bestimmen des von der einen oder den mehreren Wiegemaschinen gemessenen Gewichts.

14. Verfahren nach einem der Ansprüche 11 bis 13, welches vorzugsweise ferner die folgenden Schritte umfasst:
- Ziehen einer Luftstromrate von einer äußeren Umgebung zu einer Umgebung, in der die Trauben aufgenommen sind,
- Entfeuchten und/oder Ändern der Temperatur durch Erwärmen oder Kühlen der Luftstromrate vor dem Senden zu den Trauben,
wobei das Verfahren vorzugsweise in einer Vorrichtung (1) nach einem oder mehreren der Ansprüche 1 bis 10 ausgeführt wird.

## Revendications

1. Installation (1) pour le flétrissage de raisins par déshydratation, comprenant :
- une chambre de déshumidification (2) isolable vis-à-vis d'un environnement externe et destinée à recevoir des récipients de raisins (C) empilés sur une rangée de palettes, ladite chambre (2) étant définie par des parois de plancher, de plafond et de coque périphériques, lesdites parois de coque étant destinées à relier ensemble lesdites parois de plafond et de plancher,
- des moyens de génération de flux d'air (30) comprenant un circuit de ventilation et des premier et second modules de diffusion (4a, 5a, 4b, 5b, 4c, 5c) pour ledit flux d'air dans ladite chambre (2),
- au moins un capteur pour détecter au moins un paramètre de fonctionnement indiquant le niveau de déshydratation des raisins, lesdits moyens de génération de flux d'air étant reliés de manière fonctionnelle audit au moins un capteur de façon à commander ledit flux d'air sur la base dudit au moins un paramètre de fonctionnement, **caractérisée par le fait que** :
- lesdits premier et second modules de diffusion (4a, 5a, 4b, 5b, 4c, 5c) sont disposés l'un face à l'autre sur lesdites parois de coque au niveau des côtés opposés de la chambre (2) et sont destinés respectivement pour l'alimentation forcée d'un flux d'air et pour l'admission correspondante de celui-ci, lesdits premier et second modules de diffusion (4a, 5a, 4b, 5b, 4c, 5c) comportant sensiblement la même section de passage d'air, de façon à obtenir un mouvement d'air uniforme qui est horizontal et orthogonal à la rangée de palettes,
- lesdits moyens de génération de flux d'air étant destinés à envoyer ledit flux d'air dudit premier module de diffusion audit second module de diffusion, et inversement, et lesdits moyens de génération de flux d'air étant commandables de façon à inverser la direction dudit flux d'air.

2. Installation selon la revendication 1, dans laquelle chacun desdits modules de diffusion (4a, 5a, 4b, 5b, 4c, 5c) comprend un boîtier (400a) ayant une première section s'effilant uniformément d'une extrémité à l'autre et qui reste constante le long d'une seconde section transversale à ladite première section, ledit boîtier comprenant une paroi de distribution (410a) comportant une pluralité de trous (420a) pour le passage d'air, lesdits modules de diffusion (4a, 5a, 4b, 5b, 4c, 5c) étant, de préférence, identiques l'un à l'autre ; ladite première section étant, de préférence, obtenue par découpe dudit boîtier avec un plan vertical.

3. Installation (1) selon la revendication 1 ou 2, dans laquelle les moyens de génération de flux d'air sont configurés pour inverser périodiquement le flux d'air pendant une période de déshydratation sur la base d'une temporisation prédéterminée ou d'une temporisation dépendant de paramètres de fonctionnement.

4. - Installation (1) selon l'une quelconque des revendications précédentes, comprenant en outre :
au moins un système de collecte pour l'eau condensée, et
au moins un système mesurant la quantité d'eau collectée par ledit système de collecte.

5. Installation selon la revendication 4, ledit flux d'air étant, de préférence, destiné à être commandé sur la base de la mesure par ledit système mesurant la quantité d'eau collectée.

6. Installation (1) selon l'une quelconque des revendications précédentes, comprenant en outre au moins un capteur de poids (19) pour détecter le poids des récipients (C) reçus au niveau d'une zone (Z) de ladite chambre (2), et dans laquelle lesdits moyens de génération de flux d'air sont réglables afin de commander ledit flux d'air sur la base de la mesure dudit capteur de poids (19).

7. Installation (1) selon l'une quelconque des revendications précédentes, comprenant en outre au moins un parmi un capteur de température et un capteur d'humidité pour détecter au moins un paramètre de fonctionnement sur la base de la température et/ou de l'humidité de l'air dans la chambre (2), et dans laquelle lesdits moyens de génération de flux d'air sont réglables afin de commander ledit flux d'air sur la base de la mesure dudit capteur de température ou dudit capteur d'humidité.

8. Installation (1) selon l'une quelconque des revendications précédentes, dans laquelle lesdits moyens de génération de flux d'air (3) comprennent une unité de ventilation de traitement d'air UTA (30) reliée de manière fonctionnelle audit circuit de ventilation d'air et au moins deux conduits d'admission et/ou d'évacuation pour l'air d'un environnement externe dans ladite chambre (34) pour introduire l'air ambiant dans ledit circuit de ventilation ou l'évacuer de celui-ci, ladite unité de ventilation de traitement d'air UTA (30) comprenant, de préférence, au moins un parmi un filtre à air, un système de ventilation centrifuge avec inverseur, un échangeur de chaleur avec fluide froid pour déshumidifier l'air, un échangeur de chaleur avec fluide chaud ou éléments chauffants pour le post-chauffage dudit air, un conduit de dérivation (36) régulable par une vanne de modulation (37) et un dispositif de pesée (40) pour l'eau condensée.

9. Installation (1) selon la revendication 8, **caractérisée par le fait que** ledit dispositif de pesée (40) pour l'eau condensée comprend deux réservoirs aptes à être remplis de manière alternée (41, 42) montés sur des capteurs correspondants (43, 44) pour détecter le poids de chaque réservoir (41, 42), lesdits deux réservoirs (41, 42) étant reliés par un tuyau (45) pour le transfert à un bassin de collecte d'eau condensée de ladite unité de ventilation de traitement d'air UTA (30), afin de détecter un paramètre de fonctionnement indirect indiquant un niveau de déshydratation desdits raisins, ladite installation (1) comprenant, de préférence, une pluralité de premiers modules de diffusion pour introduire, dans l'installation, une pluralité de flux d'air et comprenant en outre une pluralité de seconds modules de diffusion pour aspirer ladite pluralité de flux d'air, et dans laquelle installation les moyens de génération de flux d'air sont destinés à moduler chacun de ladite pluralité de flux d'air sur la base d'au moins un paramètre de fonctionnement et/ou à inverser la totalité de la pluralité desdits flux d'air.

10. Installation (1) selon la revendication 9, dans laquelle ledit au moins un paramètre de fonctionnement est une mesure de la quantité d'eau fournie dans un flux d'air parmi ladite pluralité de flux d'air, et dans laquelle, de préférence, une quantité de raisins est associée à chaque flux d'air et ledit au moins un paramètre de fonctionnement étant une mesure du poids de ladite quantité de raisins.

11. Procédé pour le flétrissage de raisins par déshydratation, comprenant au moins les étapes de :
a- disposition des raisins dans une installation isolable de l'environnement externe, l'installation comprenant une chambre de déshumidification (2) isolable d'un environnement externe et destinée à recevoir des récipients de raisins (C) empilés sur une rangée de palettes, ladite chambre (2) étant définie par des parois de plancher, de plafond et de coque périphériques, lesdites parois de coque étant destinées à relier ensemble lesdites paroi de plafond et de plancher,
b- envoyer un flux d'air sur lesdits raisins au moyen d'un premier module de diffusion,
c- aspirer ledit flux d'air au moyen d'un second module de diffusion,
**caractérisé par le fait que**
ledit premier module de diffusion et ledit second module de diffusion ont sensiblement la même section de passage d'air et sont disposés sur lesdites parois de coque au niveau des côtés opposés de la chambre (2) se faisant face l'un à l'autre le long de ladite direction prédominante de façon à obtenir un mouvement d'air uniforme qui est horizontal et orthogonal à la rangée de palettes,
et **par le fait que** le procédé comprend en outre l'étape d'inversion de la direction dudit flux d'air.

12. Procédé selon la revendication 11, comprenant les étapes de :
- mesure d'une réduction du poids global des raisins contenus dans ladite installation,
- commande dudit flux d'air sur la base de ladite mesure.

13. Procédé selon la revendication 12, dans lequel ladite mesure comprend les étapes de :
- collecte, en particulier par une opération de condensation, de l'eau contenue dans le flux d'air aspiré par ledit second module de diffusion,
- mesure de la quantité d'eau collectée
ladite mesure comprenant, de préférence, les étapes de :
- disposition de tous les raisins sur une ou plusieurs machines de pesée montées sur le plancher,
- détermination du poids mesuré par ladite ou lesdites machines de pesée.

14. Procédé selon l'une quelconque des revendications 11 à 13, comprenant en outre, de préférence, les étapes de :
- aspiration d'un débit d'air d'un environnement externe à un environnement dans lequel lesdits raisins sont reçus ;
- déshumidification et/ou changement de la température par chauffage ou refroidissement dudit débit d'air avant de l'envoyer sur lesdits raisins,
ledit procédé étant, de préférence, mis en ouvre dans une installation (1) selon une ou plusieurs des revendications 1 à 10.
